# EUROPEAN PATENT SPECIFICATION

(11) **EP 4 212 392 B1**
(45) Date of publication and mention of the grant of the patent: **23.07.2025**
(21) Application number: 22151853.3
(22) Date of filing: 17.01.2022
(51) Int. Cl.: B60R 3/02

(54) **STEP ASSEMBLY FOR AN INDUSTRIAL VEHICLE**
STUFENANORDNUNG FÜR EIN INDUSTRIEFAHRZEUG
ENSEMBLE MARCHEPIED POUR VÉHICULE INDUSTRIEL

(43) Date of publication of application: 19.07.2023
(73) Proprietor: VOLVO TRUCK CORPORATION, 405 08 Göteborg (SE)
(72) Inventor: K S, Sudeendra Thirtha Koushik, 560085 BANGALORE (IN); Hegde, Gangubai, 560097 BANGALORE (IN); K S, Madhuchandra, 560050 BANGALORE (IN)
(74) Representative: Lavoix

(56) References cited:
- WO-A1-2006/078195
- WO-A1-2013/103456
- FR-A3- 2 932 737
- JP-A- H08 156 690
- KR-A- 20140 033 823
- NL-C2- 1 004 662
- US-A1- 2003 132 595

## Description

### Technical Field

This disclosure relates to a step assembly for equipping an industrial vehicle, like a construction truck or a mining truck.

### Background Art

Industrial vehicles like trucks are equipped with boarding steps to help the truck driver, or passenger, get into the cabin of the truck. Usually, a first boarding step is installed on the side of the truck, between the front wheel and the front bumper, approximately at the height of the front bumper. This first boarding step may be quite far above ground level, and it therefore common to implement a second step closer to the ground. On certain off-roads vehicles such as mining trucks, this second step may be located within the area included in the approach angle of the vehicle. Therefore, this second step can easily be damaged by stones or various obstacles when the vehicle is driven on rough surfaces. In addition, the second step can easily rust because it is very often covered by mud. In order to avoid these inconveniences that require maintenance and servicing, these second side-steps are often dismantled and removed by the truck owner when receiving a brand-new truck. Not having this second step available is an inconvenience for the short drivers, or passengers, and can be a hazard. Document JP H08 156690 A discloses a foldable step assembly with two horizontal steps that are interconnected via a linkage mechanism, and whose opening is controlled by a linear pneumatic actuator controlled from a control unit and various sensors.

There is a need to have a step assembly that can be available when the driver or a passenger needs to enter or leave the vehicle, and which doesn't get damaged when the vehicle is driven in rough off-road conditions.

### Summary

To this end, it is proposed a step assembly for helping a user entering a cabin of an industrial vehicle as defined by the features of claim 1.

The industrial vehicle comprises one or several fixed steps. When several fixed steps are present, the fixed steps are staggered along the side of the vehicle, next to the entry door. The driver or the passenger may climb over the different fixed steps to access the cabin. When it is deployed, the mobile step member stands closer to the ground than the first fixed step, so the driver can access more easily to the cabin. When the industrial vehicle is driven, the mobile step member is in the stowed position so that the mobile step member is not in the approach angle zone. The risk of damaging the mobile step member when driving over rough obstacles is eliminated.

The following features can optionally be implemented, separately or in combination one with the others:

According to the invention, the actuation member is an actuation cable.

An actuation cable makes a reliable mechanical link that can take different shapes and thus can easily be adapted to various configurations.

According to an embodiment, the step assembly comprises an elastic member configured for moving the mobile step member from the deployed position to the stowed position in response to a closing of the entry door.

Once the driver has entered the cabin and closes his door, the elastic member brings back the mobile step member into its stowed position. No action from the driver is necessary.

In an embodiment, the elastic member is a return spring.

In an embodiment, the elastic member may be a coil spring.

In an embodiment, the elastic member may be a torsion bar.

According to an embodiment of the step assembly, the check link is configured for stopping the entry door in a predetermined position, the predetermined stopping position being an intermediate position between a closed position and a fully opened position.

Using the check link of the door to pull the actuation member allows an actuation of the step assembly that limits the number of additional parts to be fitted.

According to an embodiment of the step assembly, a rate of increase of a position of the mobile step member is proportional to a rate of increase of an opening degree of the entry door, at least for a fraction of a movement stroke from the stowed position to the deployed position.

In an embodiment of the step assembly, the mobile step member reaches the deployed position for an opening degree of the entry door inferior to a maximum opening degree of the entry door.

In an embodiment, the mobile step member leaves the stowed position for an opening degree of the entry door superior to a minimum opening degree of the entry door.

The opening degree of the entry door for which the mobile step member leaves the stowed position can be the closed position of the entry door.

The opening degree of the entry door for which the mobile step member leaves the stowed position can be a position of the entry door different from the closed position of the entry door.

The predetermined stopping position is selected among a set of stopping positions.

In an embodiment, the first rotation axis is horizontal when the step assembly is installed in the vehicle.

According to the invention, the mobile step member comprises:
- a first linkage,
- a stepping board,
- a second linkage,

a first end of the first linkage is linked to the actuation cable and a second end of the first linkage is pivotably connected to the stepping board,
a first end of the second linkage is pivotably connected to the stepping board and a second end of the second linkage is configured to pivot relatively to a fourth rotation axis.

In an embodiment, the fourth rotation axis is horizontal.

In an embodiment, the fourth rotation axis is parallel to a transversal axis of the vehicle when the step assembly is installed in the industrial vehicle.

A pivot axis of the first linkage relatively to the stepping board defines a fifth rotation axis.

A pivot axis of the second linkage relatively to the stepping board defines a sixth rotation axis.

In an embodiment, the fourth rotation axis, the fifth rotation axis and the sixth rotation axis are parallel. The first linkage, a side of the stepping board, and the second linkage define three consecutive sides of a deformable parallelogram.

In an embodiment, the second end of the first linkage is attached to a first corner of the stepping board.

In an embodiment, the first end of the second linkage is attached to a second corner of the stepping board.

The first linkage and the second linkage may have an equal length.

The disclosure also refers to a truck comprising a step assembly as described earlier.

In an embodiment, the mobile step member is configured to be located in the approach angle area when the step assembly is in the deployed position and the mobile step member is configured to be located out of the approach angle area when the step assembly is in the stowed position.

### Brief Description of Drawings

Other features, details and advantages will be shown in the following detailed description and on the figures, on which:
- Figure 1 is a schematic side view of an industrial vehicle with a step assembly,
- Figure 2 is a general view of step assembly not forming part of the present invention,
- Figure 3 is a general view of an alternative step assembly, not forming a part of the present invention.
- Figure 4 is a partial detailed view of the alternative of figure 3,
- Figure 5 is a side view of a step assembly according to the invention,
- Figure 6 is a top view of an industrial vehicle equipped with a step
- Figure 7 is another detailed view,
- Figure 8 is another detailed view of figure 7,
- Figure 9 is another detailed view of figure 8,
- Figure 10 is a curve illustrating the operation of a step assembly according to two different operating alternatives.

### Description

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

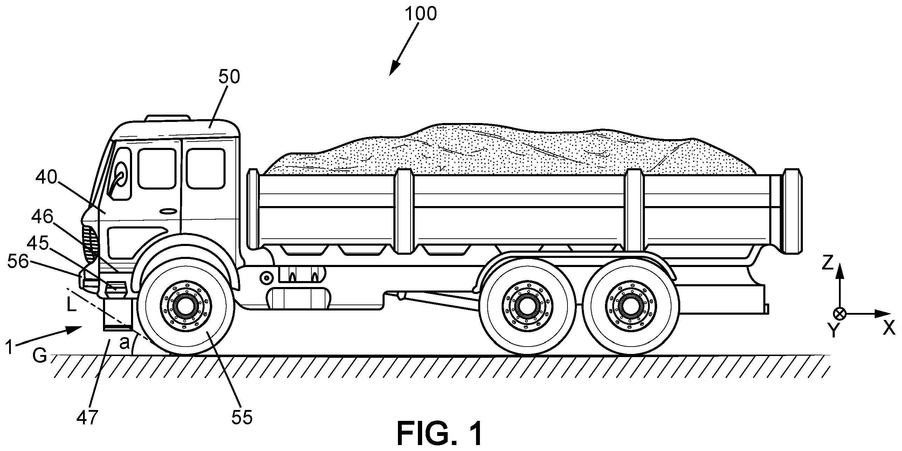

Figure 1 illustrates an industrial vehicle such as a truck 100. The truck 100 comprises a cabin 50. An entry door 40 provides access to and exit from the cabin 50. One or several fixed steps 45 are staggered along the side of the vehicle 100, next to the entry door 40. The steps provide a support at an intermediate height between the level of the ground G and the level of the sill 46 of the entry door 45. When a user intends getting in or out of the truck, he can walk on the steps 45 to safely enter or exit the cabin 50.

The dotted line L, which is tangent to the bottom of the front bumper 56 and to the front wheel 55, defines the approach angle a of the truck 100. When the truck is driven off-road, for example on construction sites or mines, any stone or obstacle located in zone 47 comprised between the ground level G and the dotted line L may be climbed over without impacting the structure of the truck. The fixed step 45, standing higher than the dotted line L, and well out of the approach angle zone, is unlikely to be hit by any obstacle.

On the other hand, any object hanging from the truck 100 and located in the area 47 comprised between the ground level G and the dotted line L is likely to be hit and damaged by the stones or obstacles that the truck is driven over. Therefore, an additional fixed step cannot be fitted in the area located below the dotted line L, since it will be quickly damaged when the truck is be driven in harsh conditions. As the ground clearance of such a truck may be quite high, having an additional step located at an intermediate level between the ground and the fixed step 45 would be useful.

The truck 200 comprises a step assembly 1 that will be detailed below.

The present disclosure proposes a step assembly 1 for helping a user entering a cabin 50 of an industrial vehicle 100,
the step assembly 1 comprising:
   - a check link 2 configured to be linked to an entry door 40 of the cabin 50,
   - an actuation member 3,
   - a mobile step member 4 configured to be movable between a stowed position S and a deployed position E,
the actuation member 3 linking the mobile step member 4 and the check link 2,
and the mobile step member 4 is configured to be moved from the stowed position S to the deployed position E by the actuation member 3 in response to an opening of the entry door 40.

As illustrated in figure 1, the mobile step member 4 is configured to be located in the approach angle area 47 when the step assembly is in the deployed position E. The mobile step member 4 is configured to be located out of the approach angle area 47 when the step assembly is in the stowed position S. The ground clearance of the truck is larger when the step assembly is in the stowed position S than when the step assembly is in the deployed position E.

When the step assembly 1 is deployed, the mobile step member 4 stands closer to the ground than the first fixed step 45, therefore the driver can access more easily to the cabin 50. When the industrial vehicle 100 is driven, the mobile step member 4 is in the stowed position S so that the mobile step member 4 is not in the approach angle zone. The risk of damaging the mobile step member 4 when driving over rough obstacles is eliminated, while providing additional support compared to the fixed steps 45.

The entry door 40 is configured for swiveling between a closed position C and a fully opened position O. The entry door is fixed to the frame of the cabin by several hinges, not represented.

In the deployed position E of the mobile step member 4, a user can step on the mobile step member 4. The mobile step member 4 comprises a stepping board 6 that can receive the foot on the user. The user may transfer its weight on the stepping board 6.

According to the invention, and as illustrated here, the actuation member 3 is an actuation cable 3. An actuation cable makes a reliable mechanical link that can take different shapes and thus can easily be adapted to various configurations.

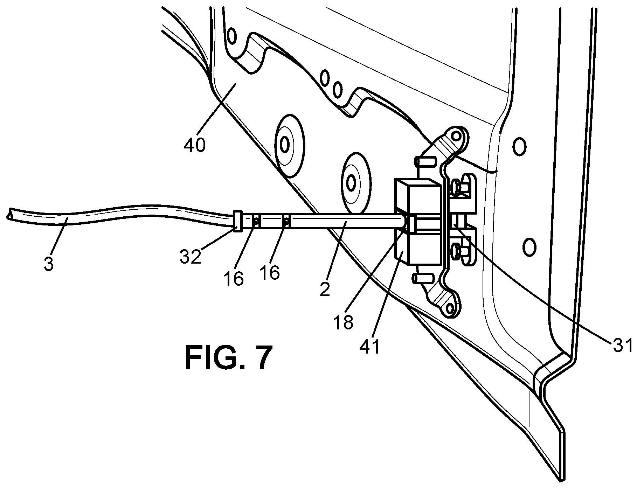

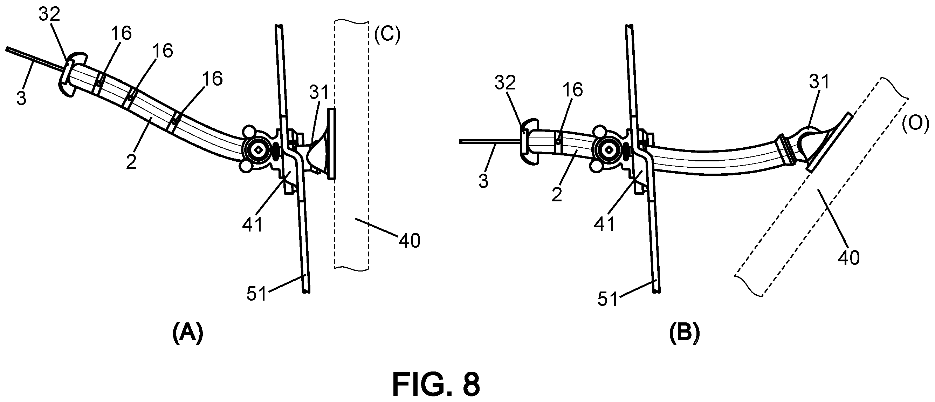

As detailed on figure 7 and figure 8, the check link 2 has an elongated shape similar to a rod. Functionally, the check link 2 is a linking rod. The check link 2 comprises a first end 31 configured to be linked to the entry door 40 of the cabin, and a second end 32 linked to a first end of the actuation cable 3. The check link 2 is pivotably linked to the entry door 40 of the cabin. For this, the first end 31 of check link 2 is fixed to the entry door 40 by a pivot pin. A rotation of the check link 2 relatively the entry door 40 is allowed. A translation motion of the check link 2 relatively the entry door 40 is blocked. A section of the check-link 2 passes through a bracket 41 fixed to the frame of the cabin 40. The actuation cable is contained, near the bracket 41, in a wire holder 42. The check link 2 may be made of sheet metal. The check link 2 may be cast. The check link 2 is horizontal when it is installed in the entry door 40 of the industrial vehicle 100.

The mobile step member 4 can be made of sheet metal. For example aluminum, magnesium can be used. The mobile step member 4 may also be made of plastic, for example injected plastic reinforced with glass fibers.

According to an embodiment, the step assembly comprises an elastic member 5 configured for moving the mobile step member 4 from the deployed position E to the stowed position S in response to a closing of the entry door 40. Once the driver has entered the cabin and closes his door, the elastic member 5 brings back the mobile step member 4 into its stowed position S. No action from the driver is necessary. The step assembly is automatically stowed before the vehicle is actually driven. There's no risk of forgetting to stow the step assembly before driving since no action is required.

The actuation cable 3 operates the mobile step member 4 against the biaising action of the elastic member 5. In an embodiment, the elastic member 5 is a return spring. For example, the elastic member 5 may be a coil spring. Alternatively, the elastic member 5 may be a torsion bar.

According to an embodiment of the step assembly, the check link 2 is configured for stopping the entry door 40 in a predetermined position, the predetermined stopping position being an intermediate position between a closed position C and a fully opened position O. Using the check link of the entry door to pull the actuation member allows an actuation of the step assembly 1 that limits the number of additional parts to be fitted.

The predetermined stopping position is selected among a set of stopping positions. The set of stopping positions may comprise three stopping positions.

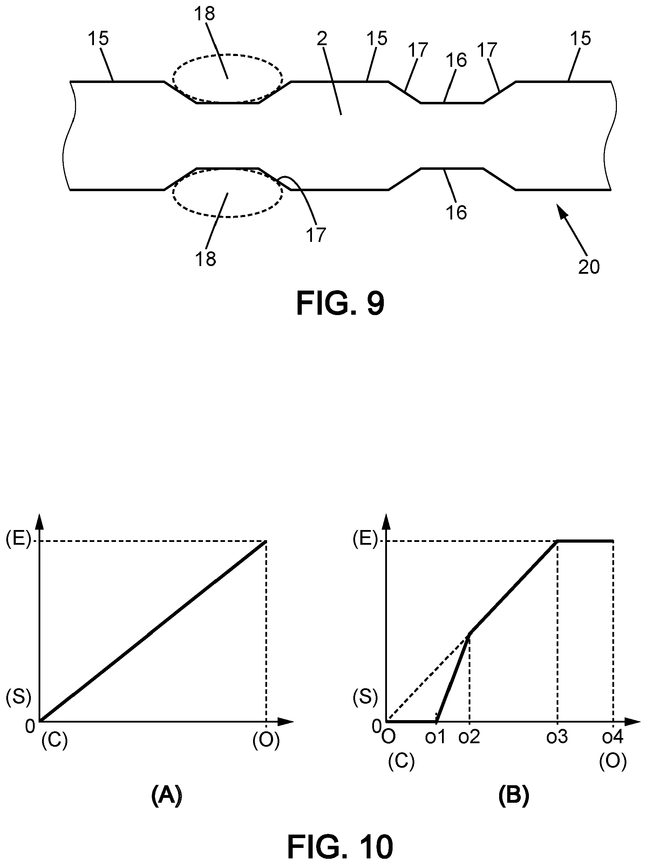

As detailed on figure 9, the check link 2 comprises a friction area 20 configured to be pressed by elastic pegs 24. The friction area comprises a flat portion 15 and a thinned portion 16. The transition between the flat portion 15 and the thinned portion 16 is made by a slope 17. When the check link 2 is moved, the elastic pegs 24 slides over the friction area 20. The stopping position is obtained when an elastic peg 24 engages into the thinned portion 16. Additional effort is then required to force the pegs 24 moving over the slope 17 until it reaches another flat portion 15. The tension of the elastic pegs 24 and the angle of the transition slopes 17 are designed to obtain the targeted resistance to maintain the entry door 40 in a stable position without requiring an excessive effort to then overcome a stopping position. The number of stopping positions is determined by the number of thinned portions 16 incorporated in the check link 2.

Figure 10 illustrates the relationship between the position of the mobile step member 4, in vertical axis, versus the opening degree of the entry door 40 in horizontal axis. Opening degree is a term equivalent to angular position of the entry door. The closed position C of the entry door 40 is obtained for an opening degree equal to 0. The fully opened position O of the entry door 40 is obtained for the opening degree o4. Similarly, the stowed position S is corresponding to position O on the vertical axis, and the deployed position E is corresponding to the maximum of the curve.

On the example of part B of figure 10, the mobile step member 4 reaches the deployed position E for an opening degree of the entry door 40 inferior to a maximum opening degree of the entry door 40. On this example, the fully deployed position E is obtained when the opening degree of entry door 40 reaches the degree o3, and remains constant until the entry door 40 is fully opened, corresponding to the opening degree o4.

The mobile step member 4 can leave the stowed position S for an opening degree a of the entry door 40 superior to a minimum opening degree of the entry door 40. In the embodiment corresponding to part B of figure 10, the opening degree of the entry door 40 for which the mobile step member 4 leaves the stowed position S is a position o1 of the entry door 40, which is different from the closed position C. In other words, the deployment of the step assembly 1 begins only once the opening of the entry door 40 has already been initiated, and the entry door 40 has already been opened by a certain amount. This configuration makes the initial opening of the door easier, and the deployment of the step assembly can make use of the momentum built during the initial phase in which the entry door is free. Deployment of the mobile step member 4 starts when the opening degree of the entry door 40 reaches the value marked o1 on part B of figure 10.

The minimum opening degree of the entry door 40 for which the mobile step member 4 leaves the stowed position S can be one of the predetermined stopping positions of the entry door 40. These positions are determined by the position of the thinned portions 16 along the check link 2.

In an embodiment corresponding to part A of figure 10, the minimum opening degree of the entry door 40 for which the mobile step member 4 leaves the stowed position S can be the closed position C of the entry door 40. In that case, the deployment of the mobile step assembly 1 begins simultaneously with the opening of the entry door 40.

Several different kinematic systems can be implemented for the actuation of the step assembly 1.

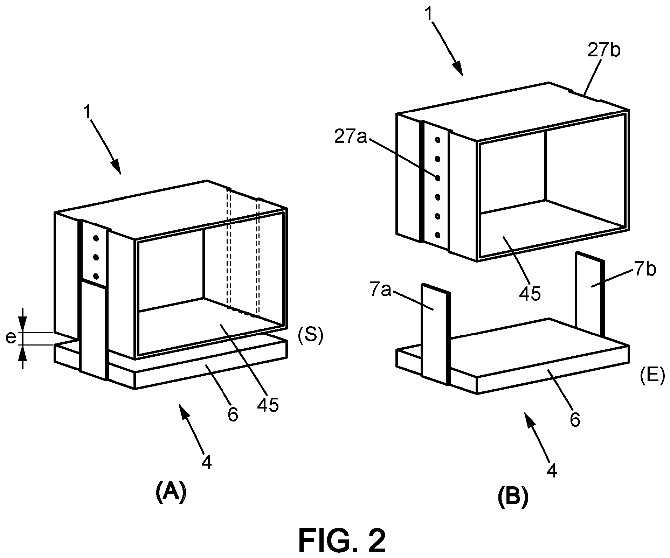

In an example of a step assembly 1, illustrated on figure 2, the mobile step member 4 is configured to slide linearly between the stowed position S and the deployed position E. The mobile step member 4 is configured to move vertically when the step assembly is normally installed in the industrial vehicle 100.

The mobile step member 4 comprises a stepping board 6 and two parallel support arms 7a, 7b extending on each side of the stepping board 6. Each support arm 7a, 7b is configured to slide respectively into a slot 27a, 27b. The slots 27a, 27b guide the translational movement of the corresponding support arm 7a, 7b.

In the example of figure 2, the stepping board 6 has a rectangular shape, and each support arm 7a, 7b joins the stepping board 6 substantially in the middle of opposite sides of the stepping board 6. The mobile step member 4 and the two parallel support arms 7a, 7b form a rigid assembly.

In this example, one end of the actuation cable 3 is attached to a support arm 7a. When the entry door 40 is opened, the actuation cable 3 is put under tension and the actuation cable 3 pulls the mobile step member 4 into the deployed position E.

A linear stroke of the mobile step member 4 is comprised between 15 centimeters and 35 centimeters. The stepping board 6 may be parallel to a fixed step 45 of the cabin 50.

In this example, the stepping board 6 is configured to be under the fixed step 45 when the mobile step member 4 is in the stowed position S, and a vertical distance e between the fixed step 45 and the mobile step member 4 is comprised between 1 centimeter and 10 centimeters, as indicated on figure 2.

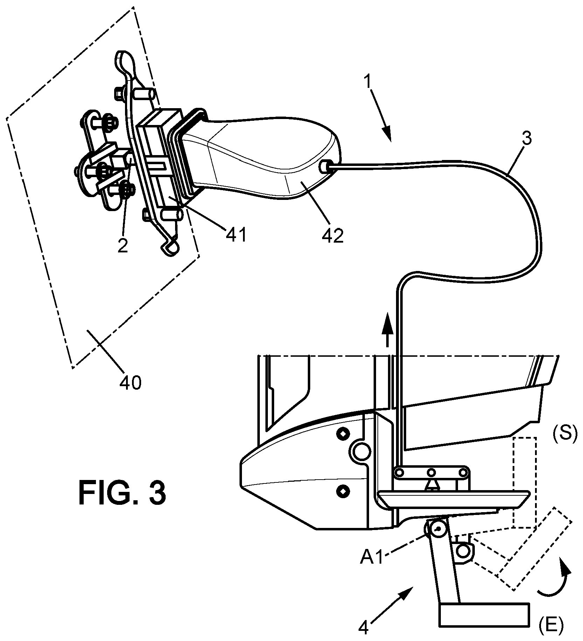

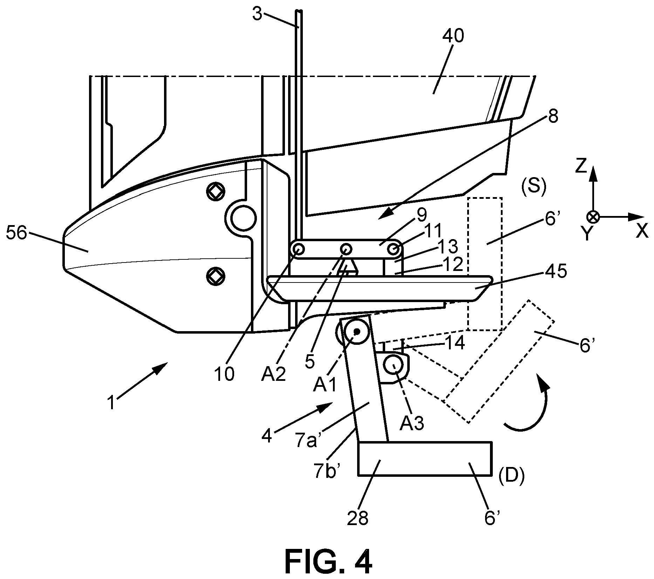

Figure 3 and figure 4 relate to another example of a step assembly 1. In this example, the mobile step member 4 is configured to swivel around a first rotation axis A1 between the stowed position S and the deployed position E.

The first rotation axis A1 is horizontal when the step assembly 1 is installed in the vehicle 100. Furthermore, the first rotation axis A1 is parallel to a transversal axis Y of the vehicle 100 when the step assembly is installed in the vehicle 100. In a non-represented embodiment, the first rotation axis A1 is parallel to a longitudinal X of the vehicle 100 when the step assembly is installed in the vehicle 100.

As represented on figure 4, the mobile step member 4 comprises a stepping board 6' and two parallels support arms 7a', 7b' extending on each side of the stepping board 6' and rigidly linked to the stepping board 6', and each support arm 7a', 7b' is configured to swivel around the first rotation axis A1. The mobile step member 4 and the two parallel support arms 7a', 7b' form a rigid assembly. As figure 4 is a side view, support arm 7a' and support arm 7b' appear merged.

The stepping board 6 has a rectangular shape, and each support arm 7a', 7b' joins the stepping board 6 substantially in consecutive corners 28 of the stepping board 6.

An angular stroke of the mobile step member 4 may be comprised between 75° and 100°.

As illustrated on figure 4, the mobile step member 4 comprises:
- a stepping board 6',
- two support arms 7a', 7b' rigidly linked to the stepping board 6', the supports arms 7a', 7b' being configured to swivel around a first rotation axis A1 between the stowed position S and the deployed position E,
- a pivot mechanism 8 comprising :
   a first pivot link 9 configured for rotating around a second rotation axis A2, a first end 10 of the first pivot link 9 being linked to the actuation cable 3,
   a second pivot link 12, a first end 13 of the second pivot link 12 being pivotally connected to a second end 11 of the fist pivot link and a second end 14 of the second pivot link 12 being pivotally connected to one support arm 7a', 7b'.

The first pivot link 9 is pulled by the actuation cable 3 when the entry door 40 is moved from the closed position C to the fully opened position O. The actuation cable 3 is attached to the first end 10 of the first pivot link 9.

The rotation axis A2 of the first pivot link 9 is parallel to the rotation axis A1 of the support arms 7a', 7b'. In other words, the first rotation axis A1 and the second rotation axis A2 are parallel.

The pivot axis of the second pivot link 12 relatively to the support arm 7a', 7b' defines a third pivot axis A3. The third pivot axis A3 is parallel to the first rotation axis A1. The pivot axis A3 of the second pivot link 12 relatively to the support arm 7a', 7b' is offset respectively to the first rotation axis A1 so that the second pivot link 12 can create a rotation torque of the support arm 7a', 7b' with respect to the first rotation axis A1.

When the step assembly 1 is installed in the truck 100 and the mobile step member 4 is in the deployed position E, the first pivot link 9 is horizontal and the second pivot link 12 is vertical.

In some examples, the step assembly 1 comprises a fixed step 45 configured to be attached to a bodywork element of the industrial vehicle 100, and the stepping board 6 is configured to be adjacent to the fixed step 45 when the mobile step member 4 is in the stowed position S. The step assembly 1 is thus compact when the mobile step member 4 is in the stowed position S.

The fixed step 45 is located below the entry door 40 of the cabin 50. The fixed step 45 extends between a front wheel 55 of the vehicle 100 and a front bumper 56 of the vehicle 100.

In an example, illustrated on figure 4, the stepping board 6 is perpendicular to the fixed step 45 of the cabin 50 when the mobile step member 4 is in the stowed position S.

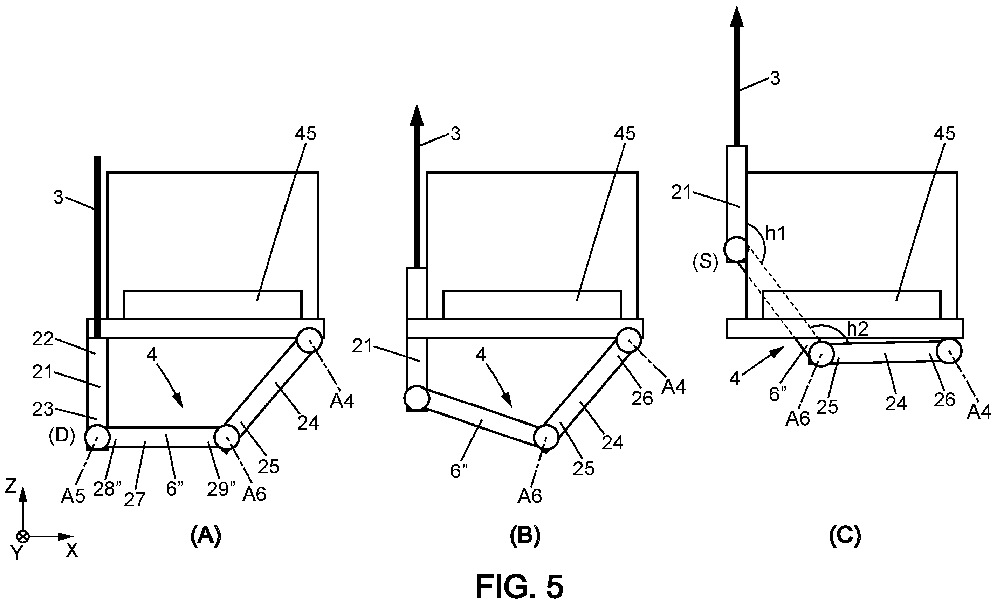

Figure 5 refers to the invention. According to the invention, the mobile step member 4 comprises:
- a first linkage 21,
- a stepping board 6",
- a second linkage 24,

a first end 22 of the first linkage 21 is linked to the actuation cable 3 and a second end 23 of the first linkage 21 is pivotably connected to the stepping board 6,
a first end 25 of the second linkage 24 is pivotably connected to the stepping board 6 and a second end 26 of the second linkage 24 is configured to pivot relatively to a fourth rotation axis A4.

The fourth rotation axis A4 is horizontal. The fourth rotation axis A4 is parallel to a transversal axis Y of the vehicle 100 when the step assembly is installed in the industrial vehicle 100.

A pivot axis of the first linkage 21 relatively to the stepping board 6" defines a fifth rotation axis A5. A pivot axis of the second linkage 24 relatively to the stepping board 6" defines a sixth rotation axis A6.

In the third embodiment, the fourth rotation axis A4, the fifth rotation axis A5 and the sixth rotation axis A6 are parallel. The first linkage 21, a side 27 of the stepping board 6", and the second linkage 24 define three consecutive sides of a deformable parallelogram.

The second end 23 of the first linkage 21 is attached to a first corner 28" of the stepping board 6". The first end 25 of the second linkage 24 is attached to a second corner 29 of the stepping board 6". A straight line joining the first corner 28 and the second corner 29 define a side 27 of the stepping board 6. The first linkage 21 and the second linkage 24 may have an equal length.

When the mobile step member 4 is in the deployed position E, the first linkage 21 and the second linkage 24 are parallel. Furthermore, the first linkage 21 and the second linkage 24 are vertical.

When the mobile step member 4 is in the stowed position S, the second linkage 24 is horizontal. When the mobile step member 4 is in the stowed position S, the first linkage 21 is vertical.

When the mobile step member 4 is in the stowed position S, an angle h1 between the first linkage 21 and the stepping board 6" is comprised between 120° and 140°. When the mobile step member 4 is in the stowed position S, an angle h2 between the stepping board 6 and the second linkage 24 is comprised between 130° and 150°. This configuration is represented on part C of figure 5.

The first linkage 21, the stepping board 6" and the second linkage 24 are neatly stowed and out of the approach angle area 47 when the mobile step member 4 is in the stowed position S. As with the first two embodiments, the step assembly 1 as disclosed provides a support for access to the industrial vehicle, that is deployed only when access is required. The step assembly is protected from the damages of rough driving conditions since it is stowed when the industrial vehicle is driven.

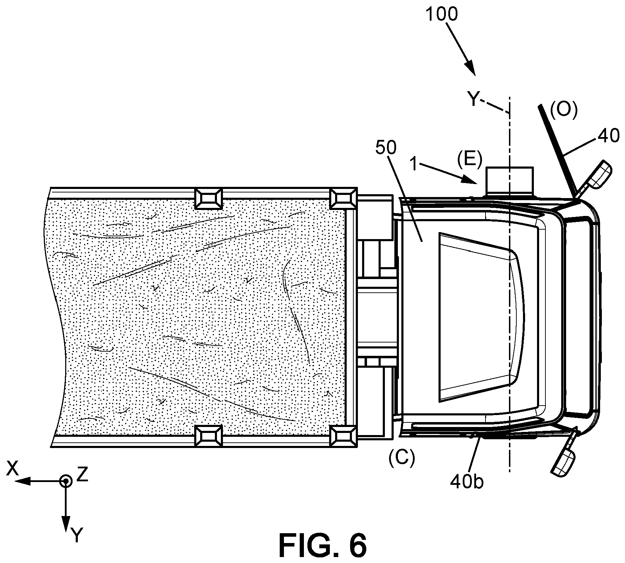

For each example, similar step assemblies can be fitted on either side of the truck 100. One device is deployed when the driver door 40 is opened, and the other device is deployed when the passenger door 40b is opened. The operation of the device equipping the passenger's door 40b is similar to the operation of the device 1a equipping the driver's door. On figure 6, the driver door 40 is opened so the step assembly 1 is in the deployed position E. The passenger door 40b is closed so the step assembly is in the stowed position, not visible on this top view. One door of the truck may be fitted with a step assembly according to one example and the other door of the truck may be fitted with a step assembly according to another example.

## Claims

1. A step assembly (1) for helping a user entering a cabin (50) of an industrial vehicle (100), the step assembly (1) comprising:
- a check link (2) configured to be linked to an entry door (40) of the cabin (50),
- an actuation cable (3),
- a mobile step member (4) configured to be movable between a stowed position (S) and a deployed position (E),
the actuation cable (3) linking the mobile step member (4) and the check link (2),
in which the mobile step member (4) is configured to be moved from the stowed position (S) to the deployed position (E) by the actuation cable (3) in response to an opening of the entry door (40),
in which the mobile step member (4) comprises:
- a first linkage (21),
- a stepping board (6"),
- a second linkage (24),
in which a first end (22) of the first linkage (21) is linked to the actuation cable (3) and a second end (23) of the first linkage (21) is pivotably connected to the stepping board (6),
in which a first end (25) of the second linkage (24) is pivotably connected to the stepping board (6) and a second end (26) of the second linkage (24) is configured to pivot relatively to a fourth rotation axis (A4).

2. The step assembly (1) according to the claim 1, comprising an elastic member (5) configured for moving the mobile step member (4) from the deployed position (E) to the stowed position (S) in response to a closing of the entry door (40).

3. The step assembly (1) according to one of preceding claims, in which the check link (2) is configured for stopping the entry door (40) in a predetermined position, the predetermined stopping position being an intermediate position between a closed position (C) and a fully opened position (O).

4. The step assembly (1) according to one of the preceding claims, in which a rate of increase of a position of the mobile step member (4) is proportional to a rate of increase of an opening degree of the entry door (40), at least for a fraction of a movement stroke from the stowed position (S) to the deployed position (E).

5. The step assembly (1) according to one of the preceding claims, in which a pivot axis of the first linkage (21) relatively to the stepping board (6") defines a fifth rotation axis (A5) and a pivot axis of the second linkage (24) relatively to the stepping board (6") defines a sixth rotation axis (A6), and
in which the fourth rotation axis (A4), the fifth rotation axis (A5) and the sixth rotation axis (A6) are parallel,
and in which the first linkage (21), a side (27) of the stepping board (6), and the second linkage (24) define three consecutive sides of a deformable parallelogram.

6. A truck (100) comprising a step assembly (1) according to one of the preceding claims.

7. The truck (100) according to the preceding claim, in which the mobile step member (4) is configured to be located in the approach angle area when the step assembly is in the deployed position (E) and in which the mobile step member (4) is configured to be located out of the approach angle area when the step assembly is in the stowed position (S).

## Patentansprüche

1. Stufenanordnung (1) zur Unterstützung eines Benutzers beim Betreten einer Kabine (50) eines Industriefahrzeugs (100), wobei die Stufenanordnung (1) umfasst:
- ein Kontrollglied (2), das konfiguriert ist, um mit der Eingangstür (40) der Kabine (50) verbunden zu sein,
- ein Betätigungskabel (3),
- ein bewegliches Stufenelement (4), das so konfiguriert ist, dass es zwischen einer verstauten Position (S) und einer ausgefahrenen Position (E) bewegt werden kann,
das Betätigungskabel (3), das das bewegliche Stufenelement (4) und das Kontrollglied (2) verbindet, wobei das bewegliche Stufenelement (4) so konfiguriert ist, dass es durch das Betätigungskabel (3) als Reaktion auf ein Öffnen der Eingangstür (40) von der verstauten Position (S) in die ausgefahrene Position (E) bewegt wird, wobei das bewegliche Stufenelement (4) umfasst:
- ein erstes Gestänge (21),
- ein Trittbrett (6"),
- ein zweites Gestänge (24),
wobei ein erstes Ende (22) des ersten Gestänges (21) mit dem Betätigungskabel (3) verbunden ist und ein zweites Ende (23) des ersten Gestänges (21) schwenkbar mit dem Trittbrett (6) verbunden ist,
wobei ein erstes Ende (25) des zweiten Gestänges (24) schwenkbar mit dem Trittbrett (6) verbunden ist und ein zweites Ende (26) des zweiten Gestänges (24) so konfiguriert ist, dass es relativ zu einer vierten Drehachse (A4) schwenkt.

2. Stufenanordnung (1) nach Anspruch 1, umfassend ein elastisches Element (5), das konfiguriert ist, um das bewegliche Stufenelement (4) als Reaktion auf ein Schließen der Eingangstür (40) von der ausgefahrenen Position (E) in die verstaute Position (S) zu bewegen.

3. Stufenanordnung (1) nach einem der vorherigen Ansprüche, wobei das Kontrollglied (2) konfiguriert ist, um die Eingangstür (40) in einer vorbestimmten Halteposition anzuhalten, wobei die vorbestimmte Halteposition eine Zwischenposition zwischen einer geschlossenen Position (C) und einer vollständig geöffneten Position (O) ist.

4. Zusammenklappbare Stufenanordnung (1) nach einem der vorherigen Ansprüche, wobei eine Steigerungsrate einer Position des beweglichen Stufenelements (4) proportional zu einer Steigerungsrate eines Öffnungsgrads der Eingangstür (40) ist, zumindest für einen Bruchteil eines Bewegungshubs von der verstauten Position (S) in die ausgefahrene Position (E).

5. Stufenanordnung (1) nach einem der vorhergehenden Ansprüche, bei der eine Schwenkachse des ersten Gestänges (21) relativ zum Trittbrett (6") eine fünfte Drehachse (A5) und eine Schwenkachse des zweiten Gestänges (24) relativ zum Trittbrett (6") eine sechste Drehachse (A6) definiert, und
wobei die vierte Drehachse (A4), die fünfte Drehachse (A5) und die sechste Drehachse (A6) parallel sind,
und wobei das erste Gestänge (21), eine Seite (27) des Trittbretts (6) und das zweite Gestänge (24) drei aufeinanderfolgende Seiten eines verformbaren Parallelogramms bilden.

6. Fahrzeug (100), umfassend eine Stufenanordnung (1) nach einem der vorherigen Ansprüche.

7. Das Fahrzeug (100) nach dem vorhergehenden Anspruch, bei dem das bewegliche Stufenelement (4) so konfiguriert ist, dass es sich im Anfahrwinkelbereich befindet, wenn sich die Stufenanordnung in der ausgefahrenen Position (E) befindet, und bei dem das bewegliche Stufenelement (4) so konfiguriert ist, dass es sich außerhalb des Anfahrwinkelbereichs befindet, wenn sich die Stufenanordnung in der verstauten Position (S) befindet.

## Revendications

1. Ensemble marchepied (1) pour aider un utilisateur à entrer dans une cabine (50) d'un véhicule industriel (100), l'ensemble marchepied (1) comprenant :
- - une liaison de contrôle (2) configurée pour être reliée à une porte d'entrée (40) de la cabine (50),
- un câble d'actionnement (3),
- un élément de marchepied mobile (4) configuré pour pouvoir être déplacé entre une position rangée (S) et une position déployée (E),
le câble d'actionnement (3) reliant l'élément de marchepied mobile (4) et la liaison de contrôle (2),
dans lequel l'élément de marchepied mobile (4) est configuré pour être déplacé de la position rangée (S) à la position déployée (E) par le câble d'actionnement (3) en réponse à une ouverture de la porte d'entrée (40), dans lequel l'élément de marchepied mobile (4) comprend :
- une première liaison (21),
- une planche de marchepied (6"),
- une seconde liaison (24),
dans lequel une première extrémité (22) de la première liaison (21) est reliée au câble d'actionnement (3) et une seconde extrémité (23) de la première liaison (21) est reliée de manière pivotante à la planche de marchepied (6),
dans lequel une première extrémité (25) de la seconde liaison (24) est reliée de manière pivotante à la planche de marchepied (6) et une seconde extrémité (26) de la seconde liaison (24) est configurée pour pivoter relativement à un quatrième axe de rotation (A4).

2. Ensemble marchepied (1) selon la revendication 1, comprenant un élément élastique (5) configuré pour déplacer l'élément de marchepied mobile (4) de la position déployée (E) à la position rangée (S) en réponse à une fermeture de la porte d'entrée (40).

3. Ensemble marchepied (1) selon l'une des revendications précédentes, dans lequel la liaison de contrôle (2) est configurée pour arrêter la porte d'entrée (40) dans une position d'arrêt prédéterminée, la position d'arrêt prédéterminée étant une position intermédiaire entre une position fermée (C) et une position complètement ouverte (O).

4. Ensemble marchepied (1) selon l'une des revendications précédentes, dans lequel une vitesse d'augmentation d'une position de l'élément de marchepied mobile (4) est proportionnelle à une vitesse d'augmentation d'un degré d'ouverture de la porte d'entrée (40), au moins pour une fraction d'une course de mouvement de la position rangée (S) à la position déployée (E).

5. Ensemble marchepied (1) selon l'une des revendications précédentes, dans lequel un axe de pivotement de la première liaison (21) par rapport à la planche de marchepied (6") définit un cinquième axe de rotation (A5) et un axe de pivotement de la seconde liaison (24) par rapport à la planche de marchepied (6") définit un sixième axe de rotation (A6), et
dans lequel le quatrième axe de rotation (A4), le cinquième axe de rotation (A5) et le sixième axe de rotation (A6) sont parallèles,
et dans lequel la première liaison (21), un côté (27) de la planche de marchepied (6) et la seconde liaison (24) définissent trois côtés consécutifs d'un parallélogramme déformable.

6. Camion (100) comprenant un ensemble marchepied (1) selon l'une des revendications précédentes.

7. Camion (100) selon la revendication précédente, dans lequel l'élément de marchepied mobile (4) est configuré pour être situé dans la zone de l'angle d'approche lorsque l'ensemble marchepied se trouve dans la position déployée (E) et dans lequel l'élément de marchepied mobile (4) est configuré pour être situé hors de la zone de l'angle d'approche lorsque l'ensemble marchepied se trouve dans la position rangée (S).
